# EUROPEAN PATENT APPLICATION

(11) **EP 3 486 357 A1**
(43) Date of publication of application: **22.05.2019**
(21) Application number: 17827032.8
(22) Date of filing: 14.07.2017
(51) Int. Cl.: D04H 1/54, B41M 5/42, B32B 5/22, A61F 13/62

(54) **NON-WOVEN FABRIC WEB HAVING PRINTED PATTERN**

(30) Priority: 15.07.2016 CN 201610557711
(71) Applicant: Xiamen Hejie Non-woven Products Co., Ltd., Xiamen, Fujian 361100 (CN)
(72) Inventor: WENG, Qiqing, Xiamen Fujian 361100 (CN)
(74) Representative: Lang, Christian
(86) International application number: PCT/CN2017/093039
(87) International publication number: WO 2018/010696

(57) **Abstract**

A non-woven fabric web having a printed pattern. The web has an air permeability of 0-3500 L/m²/s, and comprises an upper surface fiber layer, at least one middle ink-receiving layer, and a lower surface fiber layer sequentially connected. Fibers in the upper surface fiber layer and lower surface fiber layer have a fiber fineness larger than 1.0D. Fibers in the middle ink-receiving layer have a fiber fineness smaller than 0.3D. The middle ink-receiving layer is printed with a single-color or multi-color ink printed pattern. The fibers respectively in the upper surface fiber layer, the at least one middle ink-receiving layer, and the lower surface fiber layer are laid, sprayed, and formed into shape via heat pressing points by means of a single thermal bonding process. The area of recessed regions formed by the heat pressing points is 5-70% of the total area. The non-woven fabric web of the present invention can effectively prevent an ink transfer during use from causing potential problems, such as skin allergies.

## Description

### Technical field

The invention belongs to the technical field of non-woven fabric, in particular to a non-woven fabric web having printed pattern.

### Background technology

The belt of paper diapers is usually made of non-woven fabric web. When used, the connection between the front and back waists is usually fixed by magic stickers. The left and right flanks of the back waist are designed with hooks, and the front waist is designed with rings.Usually the front waist needs to be provided with exquisite printed pattern, which has certain attraction for infants, reduces the resistance of infants to long-term use, and can be printed related information such as diapers model, button label, etc. It is convenient for novice mothers to refer to, and easier to skillfully wear when applied. However, the existing rings are usually made of woven or non-woven threads bonded together with plastic films with printed patterns provided with.For example, the utility model patent No. 2012 0354129.4 relates to a plastic textile composite roll film, which is mainly used for baby's wet urine belt.The composite roll film comprises a plastic film layer, an adhesive layer and a textile fabric layer with a print pattern provided with it. The plastic film layer is bonded to the upper surface of the textile layer through an adhesive layer. Because the surface of the plastic film layer is easy to print exquisite patterns, and the pattern is printed by a printing process, which has less environmental pollution, the printing is convenient and the cost is low.But because of its plastic film, when used in disposable sanitary products, such as paper diapers, its air permeability effect will be affected, and it is not easy to adjust the setting to achieve the unique air permeability requirements, which is not conducive to the subsequent ring for the processing of paper diapers.The ring of non-woven fabric is difficult to print because of its thick surface fiber, low pattern clarity and poor color fastness.

### Summary of the invention

The object of the present invention is to overcome the technical defects of the prior art and provide a non-woven fabric web having a printed pattern.

The specific technical scheme of the present invention is as follows:

A non-woven fabric web having a printed pattern. The web has an air permeability of 0-3500 L/m²/s, and comprises an upper surface fiber layer, at least one middle ink-receiving layer, and a lower surface fiber layer sequentially connected. Fibers in the upper surface fiber layer and lower surface fiber layer have a fiber fineness larger than 1.0D. Fibers in the middle ink-receiving layer have a fiber fineness smaller than 0.3D. The middle ink-receiving layer is printed with a single-color or multi-color ink printing pattern. The fibers respectively in the upper surface fiber layer, at least one middle ink-receiving layer, and the lower surface fiber layer are laid, sprayed, and formed into shape via heat pressing points by means of a single thermal bonding process. The area of recessed regions formed by the heat pressing points is 5-70% of the total area.

In a preferred implementation of the present invention, the fibers used in the middle ink-receiving layer are not larger than 0.2D in fiber fineness.

In a preferred implementation of the present invention, the weight of the middle ink-receiving layer is 2 to 25 grams per square meter.

In a preferred implementation of the present invention, the area of recessed regions formed by the heat pressing points accounts for 25-50% of the total area.

In one preferred implementation of the present invention, the gram weight is 25 to 125 grams per square meter.

In a preferred implementation of the present invention, the weight of the middle ink-receiving layer is 2 to 25 grams per square meter.

In a preferred implementation of the invention, the ink printing is gravure printing or flexographic printing.

The manufacturing method of the non-woven fabric web comprises the following steps:
(1) the thermoplastic resin is drawn and laid to form a lower surface fiber layer with a fiber fineness greater than 1.0D;
(2) hot air is used to uniformly spray fibers with a fiber fineness less than 0.3 D on the lower surface fiber layer, at the same time, the fibers are bonded to form at least one middle ink-receiving layer by utilizing the heat of the above hot air and the residual heat in the formation of fibers with a fiber fineness less than 0.3 D;
(3) the required pattern on the above middle ink-receiving layer is printed by ink printing;
(4) the thermoplastic resin is drawn and laid to form a upper surface fiber layer with a fiber fineness greater than 1.0D, which is attached to the middle ink-receiving layer;
(5) the heat pressing roll with pattern is used for heat pressing points thermal bonding.

The beneficial effects of the present invention are as follows:The invention carries out ink printing on the middle ink-receiving layer with a fiber fineness less than 0.3 D, so that the middle ink-receiving layer has one or more color ink printing patterns, and overcomes the shortcomings caused by the air-tight of other plastic film printing layers.At the same time, it solves the printing problems of other non-woven fabrics, such as unclear printed patterns due to rough printing surface.Because the fiber diameter of the middle ink-receiving layer is smaller and the specific surface area is larger, the surface activation energy of the middle ink-receiving layer is increased, the adhesion of the ink is enhanced, and the printing quality of the printed pattern is improved to a great extent. Moreover, the printed pattern is located in the middle layer, which effectively prevents the ink from fading and easily causing skin allergies.The increase of printed patterns can also be attractive to infants, reduce their resistance to long-term use of diapers and other sanitary products, and can print related information such as diapers model, button labeling, which is convenient for novice mothers to refer to, and easier to skillfully wear when applied.

### Drawings

Fig. 1 is a cross-sectional view of the structure of the non-woven fabric web of embodiment 1 of the present invention.
Fig. 2 is a cross-sectional view of the structure of the non-woven fabric web of embodiment 2 of the present invention.
Fig. 3 is a schematic diagram of the paper diapers of embodiment 3 of the present invention.

### Detailed description

The following is a further description and description of the technical scheme of the present invention through specific embodiments in conjunction with the accompanying drawings.

### Embodiment 1

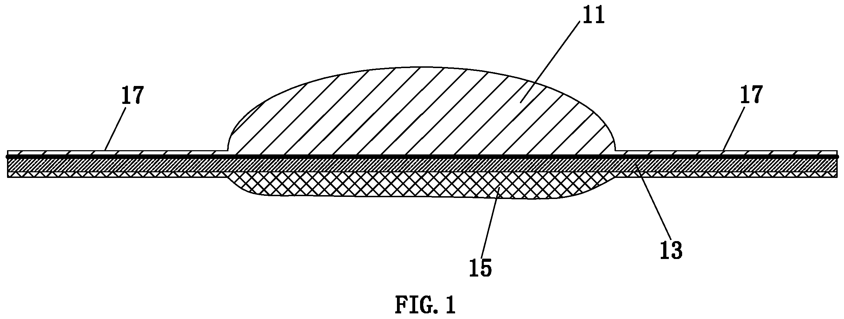

As shown in Fig. 1, a non-woven fabric web having a printed pattern. The web has an air permeability of 0-3500 L/m²/s, and comprises an upper surface fiber layer 11, one middle ink-receiving layer 13 (the weight is 2 to 25 grams per square meter), and a lower surface fiber layer 15 sequentially connected. Fibers in the upper surface fiber layer 11 and lower surface fiber layer 15 have a fiber fineness 2.0D. Fibers in the middle ink-receiving layer have a fiber fineness 0.2D. The middle ink-receiving layer is printed with a single-color or multi-color ink printing pattern. The fibers respectively in the upper surface fiber layer 11, the middle ink-receiving layer 13, and the lower surface fiber layer 15 are laid, sprayed, and formed into shape via heat pressing points by means of a single thermal bonding process. The area of recessed regions formed by the heat pressing points is 5-70% of the total area. (preferably, 25-50%).

The preparation method comprises the following steps:
(1) the thermoplastic resin is drawn and laid to form a lower surface fiber layer with a fiber fineness 2.0D;
(2) High temperature hot air is used to spray 0.2D fibers evenly on the lower surface fiber layer 15. At the same time, the heat of hot air and the residual heat during the formation of 0.2D fiber fineness are utilized to combine the fibers to form an middle ink-receiving layer 13 with a certain strength provided with it.
(3) the required pattern on the above middle ink-receiving layer 13 is printed by printing device;
(4) the thermoplastic resin is drawn and laid to form a upper surface fiber layer with a fiber fineness 2.0D, which is attached to the middle ink-receiving layer 13;
(5) Heat pressing point bonding is carried out by heat pressing roller with pattern. The area of recessed regions 17 formed by heat pressing points accounts for 5-70% of the total area (preferably 25-50%). Thereby, heat pressing bonding area and non-bonding area are formed on the surface of non-woven fabric web.

The ink is printed on the middle ink-receiving layer 13. Because the fiber diameter of the layer is smaller and the specific surface area is larger, the surface activation energy of the layer is increased, the adhesion of the ink is enhanced, and the printing quality of the printed pattern is improved to a great extent.Moreover, the printed pattern is located in the middle ink-receiving layer 13, which effectively prevents ink transfer during use and from easily causing skin allergies and other problems.

### Embodiment 2

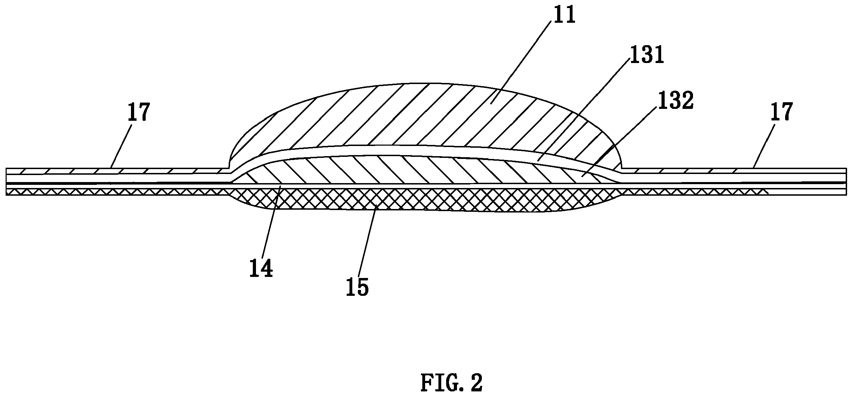

As shown in Fig. 2, a non-woven fabric web having a printed pattern. The web has an air permeability of 0-3500 L/m²/s, the weight is 25 to 125 grams per square meter, and comprises an upper surface fiber layer 11, a first middle ink-receiving layer 131 (the weight is 2 to 25 grams per square meter), a second middle ink-receiving layer 132 (the weight is 2 to 25 grams per square meter), a middle fiber layer 14 and a lower surface fiber layer 15 sequentially connected. Fibers in the upper surface fiber layer 11 ,the middle fiber layer 14 and the lower surface fiber layer 15 have a fiber fineness larger than 1.00 , the first middle ink-receiving layer 131 and the second middle ink-receiving layer 132 have a fiber fineness smaller than 3.0D. The first middle ink-receiving layer 131 and the second middle ink-receiving layer 132 constitute a total ink-receiving layer. The total ink-receiving layer is printed with a single-color or multi-color ink printing pattern. The fibers respectively in the upper surface fiber layer 11, the first middle ink-receiving layer 131, the second middle ink-receiving layer 132 ,the middle fiber layer and the lower surface fiber layer 15 are thermally bonded by via heat pressing points . The area of recessed regions 17 formed by the heat pressing points is 5-70% of the total area(preferably, 25-50%).

The preparation method comprises the following steps:
(1) the thermoplastic resin is drawn and laid to form a lower surface fiber layer 15 with a fiber fineness greater than 1.0D;
(2) The thermoplastic resin is drawn and laid on the lower surface fiber layer 15 to form a middle fiber layer 14 with the same fiber fineness larger than 1.0D. Because the second laid is used, the lower surface fiber layer 15 and the middle fiber layer 14 have relatively large fiber fineness, the superposition of the lower surface fiber layer 15 and the middle fiber layer 14 makes the weight and the fiber network surface more uniform, which provides good conditions for the uniform spraying of the printing layer 131 and the second middle ink-receiving layer 132;
(3) High temperature hot air is used to spray two layers of fibers with fineness less than 0.3D on the middle fiber layer 14. At the same time, the heat of the hot air and the residual heat during the formation of the fibers with fineness less than 0.3D are utilized to combine the fibers to form the first middle ink-receiving layer 131 and the second middle ink-receiving layer 132 which are provided with a certain strength;
(4) The first middle ink-receiving layer 131 and the second middle ink-receiving layer 132 constitute a total ink-receiving layer. The pattern required for printing on the above general printing layer is printed by printing device. Because the total ink-receiving is also laid into a screen twice, the surface of the fiber layer is more delicate, the specific surface area is larger, and the surface activation energy is higher, thus forming a more uniform printing ink film, and the printed pattern quality is higher;
(5)the thermoplastic resin is drawn and laid to form a upper surface fiber layer with a fiber fineness greater than 1.0D, which is attached to the total ink-receiving layer;
(6) Heat pressing point bonding is carried out by heat pressing roller with pattern. The area of recessed regions 17 formed by heat pressing points accounts for 5-70% of the total area (preferably 25-50%). Thereby, heat pressing bonding area and non-bonding area are formed on the surface of non-woven fabric web.

### Embodiment 3

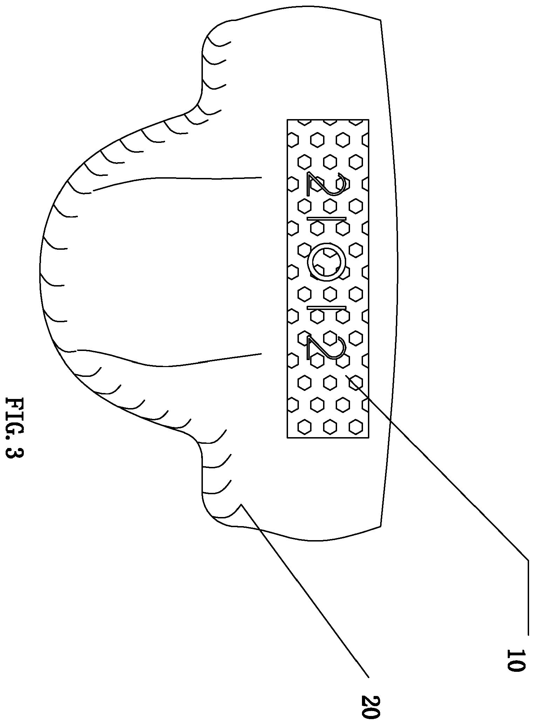

Fig. 3 is an embodiment of the non-woven fabric of the present invention used in a diaper. The front waist of the diaper body 20 is provided with a waist sticker 10. The waist sticker 10 is made of non-woven fabric web having printed patterns (as shown in Fig. 1). Its air permeability is 0-3500 L/m²/s, and its weight is 25-125 grams per square meter, including one upper surface fiber layer 11, one first middle ink-receiving layer 131, one second middle ink-receiving layer 132 ,one middle fiber layer 14,one lower surface fiber layer 15 connected in turn. The fibers used have a fiber fineness larger than 1.0D. The fibers used in the first middle ink-receiving layer 131 and the second middle ink-receiving layer 132 are smaller than 0.3 D. The first middle ink-receiving layer 131 and the second middle ink-receiving layer 132 constitute a total ink-receiving layer, and the total ink-receiving is printed one color or multi-color ink printed pattern , the upper surface fiber layer 11, the first middle ink-receiving layer 131, the second middle ink-receiving layer 132, the middle fiber layer 14 and lower surface fiber layer 15 through heat pressing points thermal bonding, and the area of recessed regions 17 by heat pressing points accounts for 25-50% of the total area preferably.

The diaper body 20 is provided with a hook member on the left and right side flaps of the back waist, and is attached to the waist ring 10 ring member at the front waist circumference of the diaper in use, so that the diaper can be worn on the user.The substrate of the non-plastic material prepared by the invention has a good gas permeability and is suitable for use in products requiring good air permeability, such as paper diapers.

At the same time, in the production process of paper diapers, the cut rings are first adsorbed on the rollers, and then fitted with the front waist of paper diapers.If the air permeability of the ring is too large, it will be difficult for the roller to absorb the ring, resulting in dislocation or drift when it fits to the front waist of the paper diapers, and many other bad products.Therefore, in the production process of paper diapers, the requirements for the air permeability of the ring should not be too large, the ideal state should be able to adjust the air permeability of the ring according to the set requirements, in order to achieve the purpose of matching production.In the invention, by adding fibers with middle fiber fineness less than 0.3D and adjusting the weight of the middle ink-receiving layer 13, the purpose of adjusting the air permeability of the ring according to the set requirements can be achieved, which makes the production of paper diapers more convenient.And by adding printing layer to reduce the resistance of infants to long-term use of paper diapers and other sanitary products, and can print related information such as diapers model, button labeling, which is convenient for novice mothers to refer to, and easier to skillfully wear when applied.

As mentioned above, it is only a better embodiment of the present invention, so the scope of implementation of the present invention can not be limited accordingly. That is, the equivalent changes and modifications made according to the patent scope and description content of the present invention should still be within the scope of the present invention.

### Industrial applicability

The invention relates to a non-woven fabric web having a printed pattern, which is successively connected with a upper surface fiber layer upper, at least one middle ink-receiving layer and a lower surface fiber layer, and the area of the concave area formed by the heat pressing points accounts for 5-70% of the total area.The non-woven fabric web of the present invention can effectively prevent an ink transfer during use from causing potential problems, such as skin allergies, and has wide application range, and is provided with good industrial practicability.

## Claims

1. A non-woven fabric web having a printed pattern ,wherein:the web has an air permeability of 0-3500 L/m²/s, and comprises an upper surface fiber layer, at least one middle ink-receiving layer, and a lower surface fiber layer sequentially connected, fibers in the upper surface fiber layer and the lower surface fiber layer have a fiber fineness larger than 1.0D, fibers in the middle ink-receiving layer have a fiber fineness smaller than 0.3D, the middle ink-receiving layer is printed with a single-color or multi-color ink printed pattern, the fibers respectively in the upper surface fiber layer, at least one middle ink-receiving layer, and the lower surface fiber layer are laid, sprayed, and formed into shape via heat pressing points by means of a single thermal bonding process, the area of recessed regions formed by the heat pressing points is 5-70% of the total area.

2. The non-woven fabric web having a printed pattern according to claim 1,wherein:the fiber fineness of the fibers used in the middle ink-receiving layer is not more than 0.2D.

3. The non-woven fabric web having printed pattern according to claim 1 ,wherein:the weight of the middle ink-receiving layer is 2 to 25 grams per square meter.

4. The non-woven fabric web having a printed pattern according to claim 1,wherein:the area of recessed regions formed by the heat pressing points accounts for 25-50% of the total area.

5. The non-woven fabric web having a printed pattern according to claim 1,wherein:its weight ranges from 25 to 125 grams per square meter.

6. The non-woven fabric web having a printed pattern according to claim 1,wherein:the weight of the middle ink-receiving layer is 2 to 25 grams per square meter.

7. The non-woven fabric web having a printed pattern according to claim 1,wherein:the ink printing is gravure printing or flexographic printing.

8. A manufacturing method of non-woven fabric web according to any of claims 1 to 7, wherein:comprising the following steps:
(1) the thermoplastic resin is drawn and laid to form a lower surface fiber layer with a fiber fineness greater than 1.0D;
(2) hot air is used to uniformly spray fibers with a fiber fineness less than 0.3 D on the lower surface fiber layer, at the same time, the fibers are bonded to form at least one middle ink-receiving layer by utilizing the heat of the above hot air and the residual heat in the formation of fibers with a fiber fineness less than 0.3 D;
(3) the required pattern on the above middle ink-receiving layer is printed by ink printing;
(4) the thermoplastic resin is drawn and laid to form a upper surface fiber layer with a fiber fineness greater than 1.0D, which is attached to the middle ink-receiving layer;
(5) the heat pressing roll with pattern is used for heat pressing points thermal bonding.
